# EUROPÄISCHE PATENTSCHRIFT

(11) **EP 1 970 252 B1**
(45) Veröffentlichungstag und Bekanntmachung des Hinweises auf die Patenterteilung: **10.10.2012**
(21) Anmeldenummer: 08004614.7
(22) Anmeldetag: 12.03.2008
(51) Int. Cl.: B60R 5/04, B60R 7/02, B60R 11/00, B60R 13/01

(54) **Ladebodensystem für ein Kraftfahrzeug**
Loading deck system for a motor vehicle
Système de fond de chargement pour un véhicule automobile

(30) Priorität: 12.03.2007 DE 102007012233
(43) Veröffentlichungstag der Anmeldung: 17.09.2008
(73) Patentinhaber: Brose Fahrzeugteile GmbH & Co. KG, 96450 Coburg (DE)
(72) Erfinder: Klotz, Wolfgang, 96450 Coburg (DE); Bauer, Karl-Heinz, 96269 Großheirath (DE); Beyersdorfer, Hartmut, 96489 Niederfüllbach (DE); Neundorf, Robert, 96237 Ebersdorf (DE)

(56) Entgegenhaltungen:
- DE-A1-102004 051 622
- DE-T2- 60 110 162
- JP-A- 61 122 048

## Beschreibung

Die Erfindung betrifft ein Ladebodensystem für ein Kraftfahrzeug nach dem Oberbegriff von Anspruch 1.

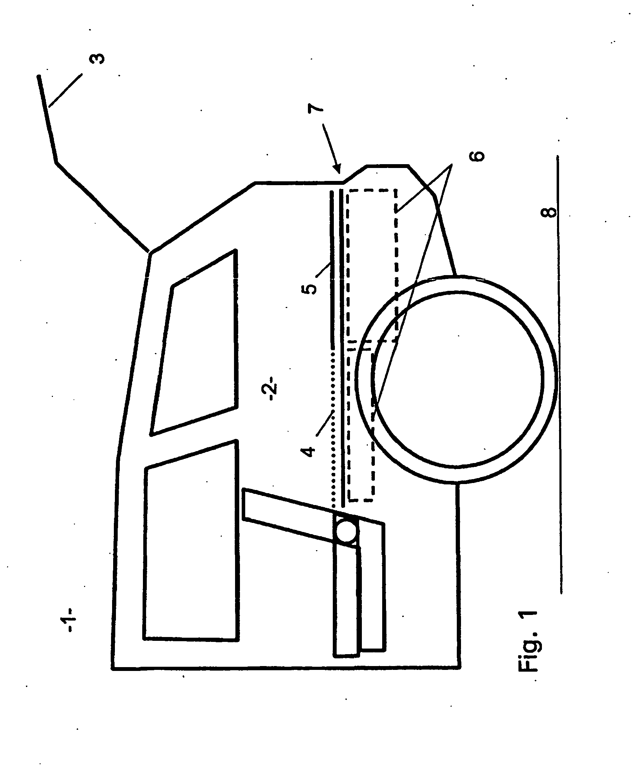

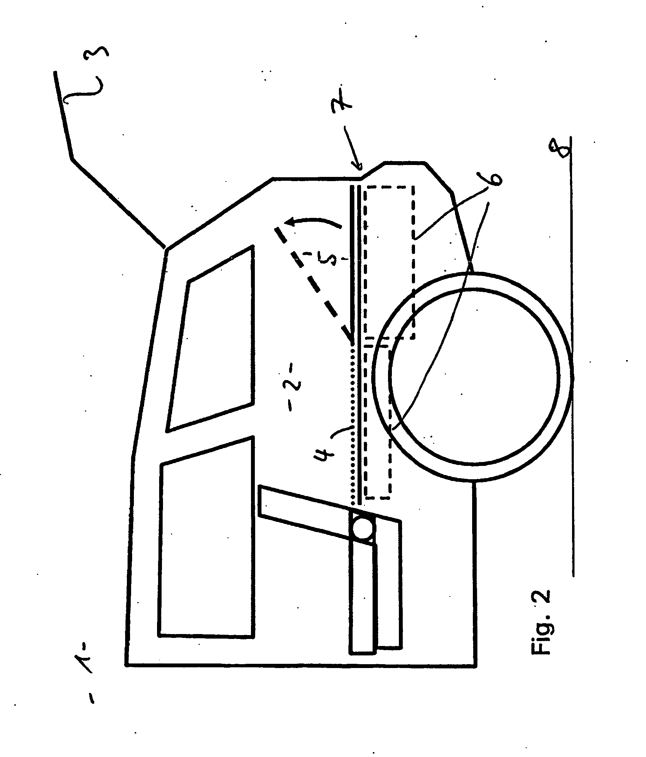

Aus der DE 601 10 162 T2 ist ein Ladebodensystem mit einem ersten, feststehenden Ladebodensegment und einem zweiten, beweglichen Ladebodensegment bekannt, die in ihrer Ausgangslage, entsprechend der dortigen Figur 1, bündig aneinander grenzen. Zum einfachen Beladen des Koffer- bzw. Laderaumes, insbesondere des Raumes unmittelbar hinter den Sitzen, läßt sich das zweite Ladebodensegment, entsprechend der dortigen Figur 2, elektromotorisch über das erste Ladebodensegment verlagern, um anschließend mit dem darauf abgelegten Transportgut wieder elektromotorisch in die Ausgangslage verlagert zu werden.

Die den gattungsgemaßen Stand der Technik bildende DE 10 2004 051 622 A1 offenbart ein Ladebodensystem für ein Kraftfahrzeug mit mindestens einem ersten Ladebodensegment und einem zweiten Ladebodensegment, welche bezogen auf die Kraftfahrzeuglängsrichtung hintereinander in einer ersten Ebene angeordnet sind, und dass das erste Ladebodensegment elektromotorisch unterstützt in eine zweite Ebene überführt werden kann, wobei sich das zweite Ladebodensegment translatorisch über das in der zweiten Ebene befindliche erste Ladebodensegment verlagern lässt.

Aufgabe der Erfindung ist es, ein derartiges Ladebodensystem flexibler zu gestalten.

Die vorliegende Erfindung beschreibt ein Ladebodensystem mit mindestens zwei Ladebodensegmenten, wobei das eine Ladebodensegment elektromotorisch und das andere manuell verlagert werden kann.

### Figurenbeschreibung

Figur 1 ein zeigt ein Kraftfahrzeug mit einem ersten und einem zweiten Ladebodensegment in einer ersten Ebene
Figur 2 zeigt das Kraftfahrzeug nach Figur 1 mit rotatorisch verlagertem zweiten Ladebodensegment
Figur 3 zeigt das Kraftfahrzeug nach Figur 1 mit elektromotorisch unterstützter Verlagerung des ersten Ladebodensegments in die zweite Ebene
Figur 4 zeigt das Kraftfahrzeug nach Figur 3 mit translatorisch verlagertem zweiten Ladebodensegment
Figur 5 zeigt das Kraftfahrzeug nach Figur 3 mit elektromotorisch verlagerten ersten Ladebodensegment

Figur 1 zeigt ein Kraftfahrzeug (1) mit einem Ladebodensystem (2) das aus einem ersten Ladebodensegment (4) und einem zweiten Ladebodensegment (5) besteht. Unter Ladebodensegment wird im Rahmen dieser Anmeldung u.a. eine Abdeckung eines darunter befindlichen Laderaumes (6) verstanden (zusätzlicher Stauraum für Werkzeug, Schuhe oder dgl.). Diese beiden Ladebodensegmente (4, 5) sind bezogen auf das Kraftfahrzeug (1) in Längsrichtung hintereinander in einer ersten Ebene angeordnet. Unter den beiden Ladebodensegmenten in Richtung Kraftfahrzeuguntergrund (8) befindet sich, lediglich strichpunktiert dargestellt, jeweils noch ein Laderaum (6).

Figur 2 zeigt das zweite Ladebodensegment (5) in einer von der Kraftfahrzeugladekante (7) aus gesehen, rotatorisch, entgegen dem Uhrzeigersinn verlagerten Stellung. Der so freigewordene Laderaum (6) kann durch einen Benutzer beladen werden.

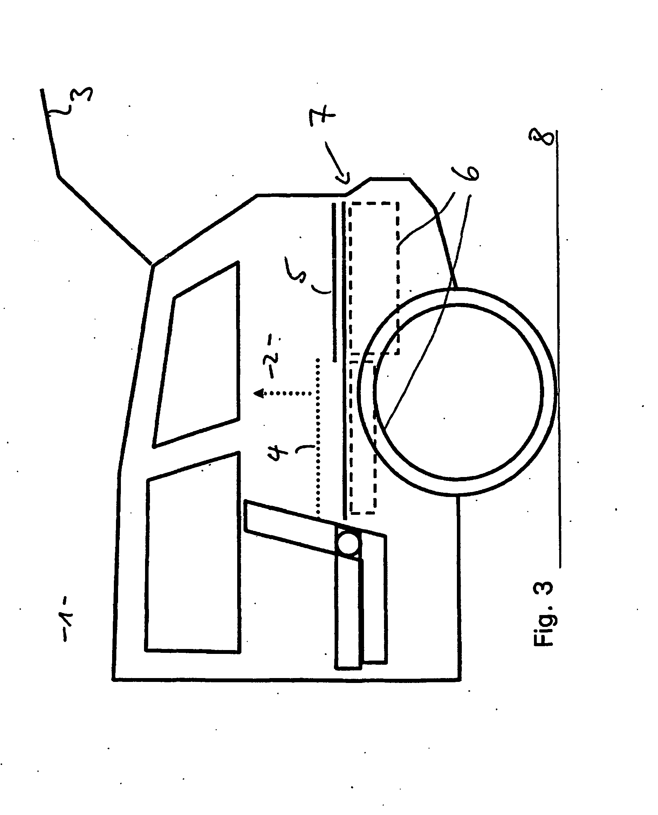

In Figur 3 ist das Ladebodensegment (4) in einer zweiten Ebene dargestellt, die oberhalb der ersten Ebene liegt.
Für diese Verlagerung kommt ein elektromotorischer Antrieb zum Einsatz, der hier der Einfachheit halber nicht dargestellt ist.

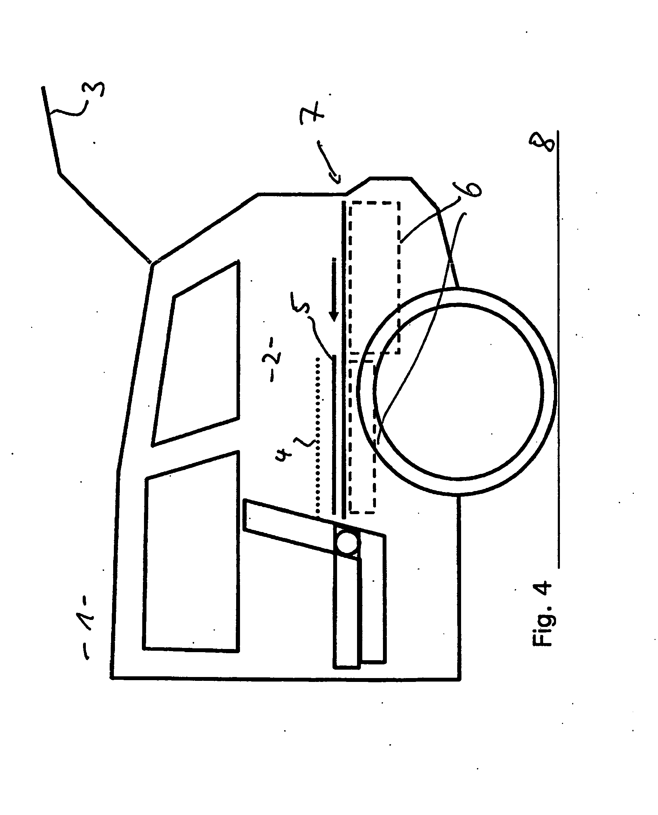

Figur 4 zeigt eine Variante des Ladebodensystems, bei dem das zweite Ladebodensegment (5) innerhalb der ersten Ebene translatorisch, vorzugsweise manuell, unter das erste Ladebodensegment (4) verlagert wurde. Dies ist selbstverständlich nur möglich, wenn zuvor das Ladebodensegment (4) elektromotorisch unterstützt in die zweite Ebene verlagert worden ist.

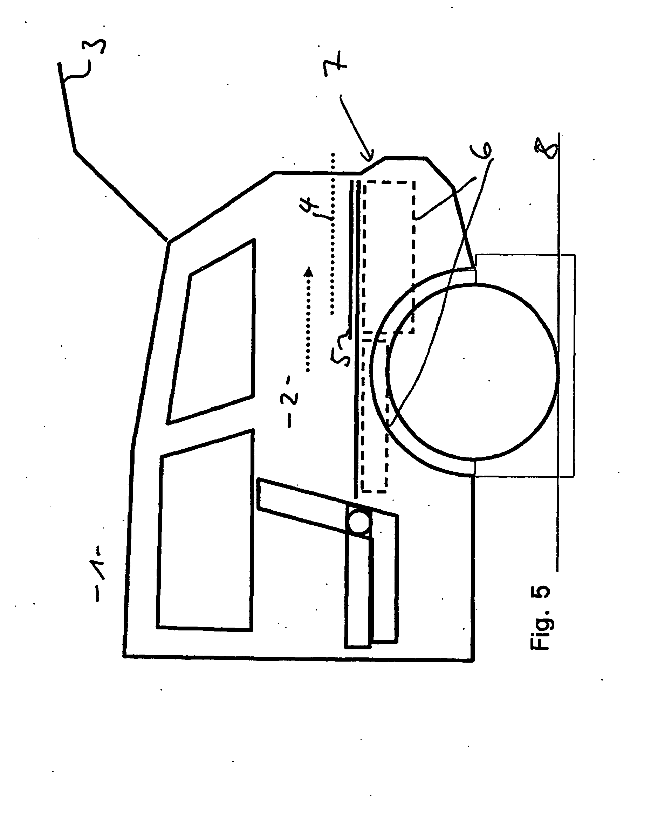

Figur 5 zeigt eine Variante des Ladebodensystems, bei der das Ladebodensegment (5) elektromotorisch unterstützt über die Kraftfahrzeugladekante (7) hinaus verlagert wurde. In dieser Stellung kann der Benutzer auf einfachste Art und Weise das Ladebodensegment (4), das sich unmittelbar hinter den Rücksitzen befindet, beladen.

## Patentansprüche

1. Ladebodensystem (2) für ein Kraftfahrzeug (1) mit mindestens einem ersten Ladebodensegment (4) und einem zweiten Ladebodensegment (5), welche bezogen auf die Kraftfahrzeuglängsrichtung hintereinander in einer ersten Ebene angeordnet sind, wobei das erste Ladebodensegment (4) elektromotorisch unterstützt in eine zweite Ebene überführt werden kann , **dadurch gekennzeichnet, dass** die zweite Ebone bezogen auf einen Kraftfahrzeuguntergrund (8) oberhalb der ersten Ebene liegt, und sich das zweite Ladebodensegment (5) translatorisch unter das in der zweiten Ebene befindliche erste Ladebodensegment (4) verlagern läßt, und dass. das erste Ladebodensegment (4) innerhalb der zweiten Ebene elektromotorisch in Richtung einer Kraftfahrzeugladekante (7) verlagert werden kann. die zweite Ebone , und dass.

2. Ladebodensystem nach Anspruch 2, **dadurch gekennzeichnet, dass** das erste Ladebodensegment (4) in der zweiten Ebene über die Kraftfahrzeugladekante (7) hinaus verlagert werden kann.

3. Ladebodensystem nach Anspruch 1, **dadurch gekennzeichnet, dass** das zweite Ladebodensegment (5) von der Kraftfahrzeugladekante (7) aus gesehen rotatorisch, entgegen dem Uhrzeigersinn verlagert werden kann.

4. Ladebodensystem nach Anspruch 1, **dadurch gekennzeichnet, dass** durch die Verlagerung der Ladebodensegmente (4, 5) Laderäume (6) zur Beladung frei gegeben werden.

## Claims

1. Loading deck system (2) for a motor vehicle (1) comprising at least a first loading deck segment (4) and a second loading deck segment (5) which, relative to the motor vehicle longitudinal direction, are arranged one behind the other in a first plane, wherein the first loading deck segment (4) can be transferred into a second plane with the assistance of an electric motor, **characterized in that** the second plane is situated above the first plane relative to a motor vehicle underlying surface (8), and the second loading deck segment (5) can be displaced translationally below the first loading deck segment (4) situated in the second plane, and **in that** the first loading deck segment (4) can be displaced by electric motor within the second plane in the direction of a motor vehicle loading edge (7).

2. Loading deck system according to Claim 1, **characterized in that** the first loading deck segment (4) can be displaced in the second plane beyond the motor vehicle loading edge (7).

3. Loading deck system according to Claim 1, **characterized in that**, as seen from the motor vehicle loading edge (7), the second loading deck segment (5) can be displaced rotationally in an anticlockwise direction.

4. Loading deck system according to Claim 1, **characterized in that** the displacement of the loading deck segments (4, 5) exposes loading spaces (6) for loading.

## Revendications

1. Système de fond de chargement (2) pour un véhicule automobile (1), comprenant au moins un premier segment de fond de chargement (4) et un deuxième segment de fond de chargement (5) qui sont disposés dans un premier plan l'un derrière l'autre par rapport à la direction longitudinale du véhicule automobile, le premier segment de fond de chargement (4) pouvant être transféré à un deuxième plan de manière assistée par un moteur électrique, **caractérisé en ce que** le deuxième plan se situe au-dessus du premier plan par rapport à une surface sous-jacente au véhicule automobile (8) et le deuxième segment de fond de chargement (5) peut être déplacé en translation en dessous du premier segment de fond de chargement (4) se trouvant dans le deuxième plan, et **en ce que** le premier segment de fond de chargement (4) peut être déplacé à l'intérieur du deuxième plan de manière électromotrice en direction d'un rebord de coffre du véhicule automobile (7).

2. Système de fond de chargement selon la revendication 1, **caractérisé en ce que** le premier segment de fond de chargement (4) peut être déplacé dans le deuxième plan au-delà du rebord de coffre du véhicule automobile (7).

3. Système de fond de chargement selon la revendication 1, **caractérisé en ce que**, vu depuis le rebord de coffre du véhicule automobile (7), le deuxième segment de fond de chargement (5) peut être déplacé de manière rotative dans le sens inverse des aiguilles d'une montre.

4. Système de fond de chargement selon la revendication 1, **caractérisé en ce que**, grâce au déplacement des segments de fond de chargement (4, 5), des espaces de chargement (6) sont libérés en vue du chargement.
